# EUROPEAN PATENT APPLICATION

(11) **EP 1 528 279 A1**
(43) Date of publication of application: **04.05.2005**
(21) Application number: 04256721.4
(22) Date of filing: 29.10.2004
(51) Int. Cl.: F16D 65/10, G01M 1/34

(54) **Brake drum balancing**

(30) Priority: 31.10.2003 US 697328
(71) Applicant: Consolidated Metco, Inc., Portland, OR 97283 (US)
(72) Inventor: Brotherton, Joseph A., Portland, Oregon 97203 (US); Griffin, Timothy Todd, Athens, Tennessee 37303 (US)
(74) Representative: Davies, Christopher Robert

(57) **Abstract**

An improved brake drum (10) and method for balancing a brake drum (10) are provided. A section (30) of the raised squealer band (24) of the brake drum (10) is removed to correct the imbalance. Preferably, a cutting machine is used to make a continually varying depth cut along a section of the squealer band (24) to correct the imbalance.

## Description

The present invention relates to brake drums and, in particular, to improved balanced brake drums and a method of balancing such brake drums.

Most brake drums for trucks and similar heavy duty vehicles are comprised of a cast iron brake drum that is subsequently machined to near final tolerances. Typically, the machine brake drum has a slight imbalance that needs to be corrected. Accordingly, the brake drum is subjected to a balancing operation. Such balancing can comprise welding correcting weights to an outer surface of the drum or removing part of the brake drum.

In particular, brake drums that have an integral raised squealer band extending from near an open end of the brake drum can be balanced by removing a portion of the squealer band. Such balancing by removing a portion of the squealer band to a constant or substantially constant depth is shown in U.S. Patent No. 5,483,855. Another method of balancing is shown in U.S. Patent No. 4,986,149, which utilizes a complex mechanism for measuring the imbalance and removing a crescent or wedge of material from the integral squealer band by the use of a lathe in a complex turning process.

It is an object of the present invention to provide an improved balanced brake drum having a section of the integral raised squealer band removed.

It is another object of the present invention to provide an improved method of balancing a brake drum by removing a portion of the integral raised squealer band.

It is another object of the present invention to provide an improved method of balancing a brake drum by removing a portion of the integral raised squealer band leaving a portion of the squealer band with a continually varying thickness.

The improved method for balancing a brake drum in accordance with the present invention utilizes a cutting or milling machine to remove a portion of the squealer band along a predetermined length and at a constantly varying depth into the squealer band. The entry cut is at a very small angle with regard to the circumferential edge of the squealer band so as to avoid stress concentrations at the point of entry. Typically, the cut can be one of several variations, all of which are included in the requirement that the cut result in a constantly varying depth of squealer band. For example, if the cut were at an extremely large radius of curvature, to the point that the cut is a straight line, the cut would form a chord across and into the squealer band. If the cut were at a lesser radius of curvature, but still greater radius of curvature than that of the squealer band itself, the cut would form a convex shape along its length. It is also possible that the cut could comprise to two straight sections, one entering the squealer band to a predetermined depth and then exiting the squealer band to form two separate areas of the cut. Each such section could be straight or curved, either to form a generally convex cut or even a generally concave cut. The removed section could also itself form a concave curved section into the squealer band.

Preferred embodiments in accordance with the present invention will now be described by way of illustration only and with reference to the accompanying drawings, in which:
Figure 1 is a perspective view of a brake drum in accordance with the present invention;
Figure 2 is an end view of the hub end of the brake drum in accordance with the present invention;
Figure 3 is an end view of the open end of the brake drum in accordance with the present invention;
Figure 4 is an end view of the open end of the brake drum showing a first embodiment of the squealer band balancing in accordance with the present invention;
Figure 5 is an end view of the open end of the brake drum showing a second embodiment of the squealer band balancing in accordance with the present invention;
Figure 6 is an end view of the open end of the brake drum in accordance with the present invention showing a third embodiment of the squealer band balancing;
Figure 7 is an end view of the open end of the brake drum in accordance with the present invention showing a fourth embodiment of the squealer band balancing,
And Figure 8 is an end view of the open end of the brake drum in accordance with the present invention showing a fifth embodiment of the squealer band balancing.

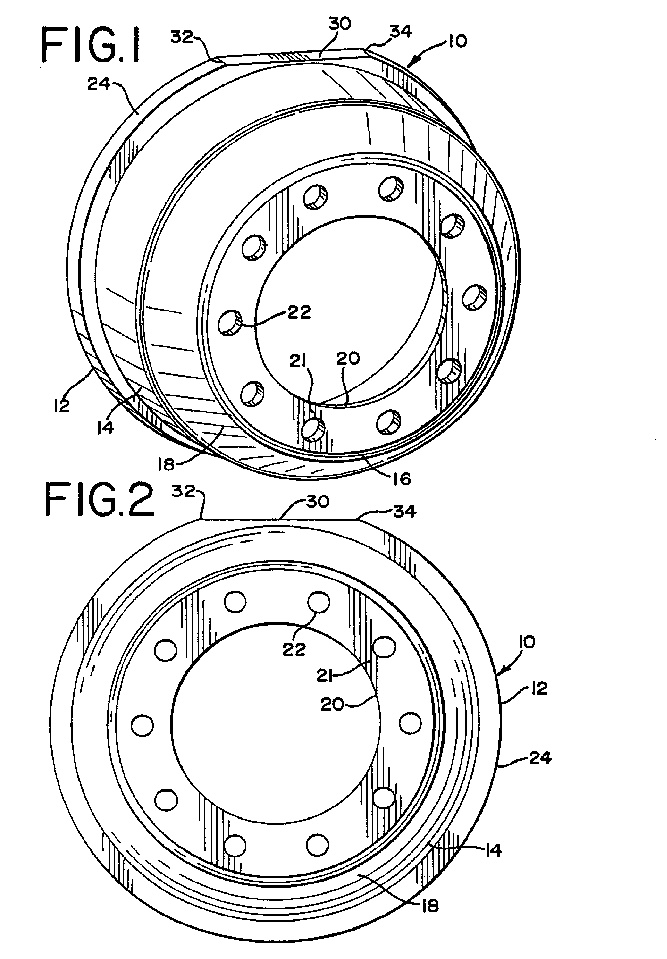

Referring to Figures 1-3 of the drawings, a brake drum in accordance with an embodiment of the present invention is shown generally at 10. It is seen that brake drum 10 is a generally cylindrical structure, having a circular open end 12 and a nearly cylindrical braking section 14 extending from open end 12 to hub end 16. Hub end 16 is seen to comprise a generally flat inner surface 21 that terminates by forming circular hub opening 20. A plurality of wheel lug openings 22 are spaced around inner surface 21 of hub end 16.

Transition section 18 is seen to extend from braking section 14 to inner surface 21 of hub end 16. Braking section 14 itself is a generally cylindrical section extending at a nearly normal relation to open end 12. However, it is also understood that a preferred embodiment of the present invention could have the outer surface of braking section 14 extending at a slightly less than normal angle to open end 12.

It should be understood that brake drum 10 is typically made of cast iron in a foundry operation. Accordingly, finishing machining operations are necessary prior to the final balancing of brake drum 10. Such machining would include the finishing of an inner surface 25 of braking section 14 to assure a nearly perfect inner cylindrical surface. Such surfaces necessary to accommodate the brake pads from the braking structure that brake drum 10 would surround. Further, the edges of open end 12 and squealer band 24 are machined.

Brake drum 10 is then final balanced using the method of the present invention.

Referring to Figures 1-3, it is seen that a section of squealer band 24 has been removed at 30, extending from entry location 32 to exit location 34. This section is removed by use of a milling machine which is set up to avoid any plunge-type entry or exit cuts, but rather the machine removes the section of squealer band 24 in a manner to create a continuously varying depth of squealer band 24 below removed section 30.

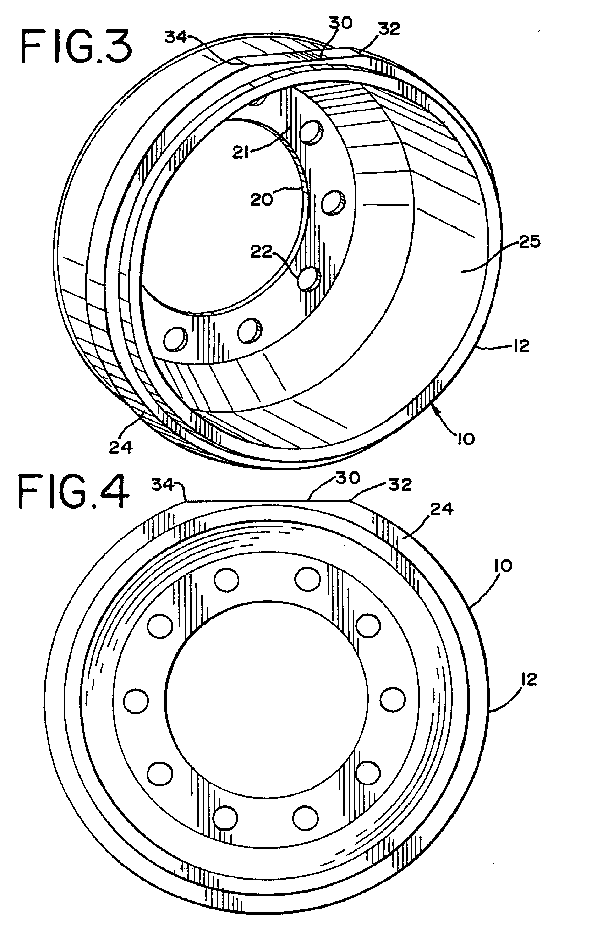

Referring now to Figure 4, the squealer band 24 is shown in an exaggerated thickness, as is brake drum 10 viewed from open end 12. Removed section 30 is seen to be a chord or straight line from entry point 32 to exit point 34. It is readily seen that the depth of the cut or removed section 30 is of a nature to cause squealer band 24 to be of a continually varying thickness below removed section 30.

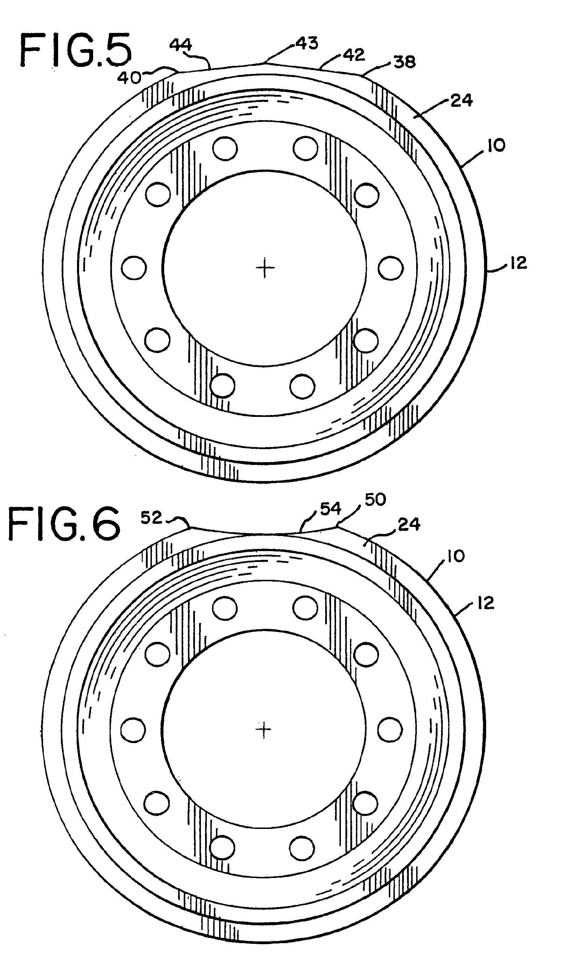

Referring now to Figure 5, brake drum 10 with open end 12 is again depicted with the thickness of squealer band 24 shown in an exaggerated manner to show the details of the removed section. In this embodiment of the present invention, the milling machine is set up to enter squealer band end 38, cut material along a straight line 42 to a center point 43 and then continue along straight line 44 to exit point 40. It is seen that the depth of the removed squealer band 24 beneath the removed areas 42 and 44 is of a continually varying nature. It should also be understood that point 43 is not necessarily an abrupt junction between straight sections 42 and 44, but could rather be an arcuate section.

Referring now to Figure 6 of the drawings, brake drum 10 is viewed from open end 12 with the thickness of squealer band 24 exaggerated to depict the removed section in the balancing operation in accordance with the present invention. The milling machine is set up to begin its cut into squealer band 24 at 50 and exit at 52, with an arcuate, concave section formed along 54. It is seen that the thickness of squealer band 24 beneath arcuate removed section 54 is continually varying.

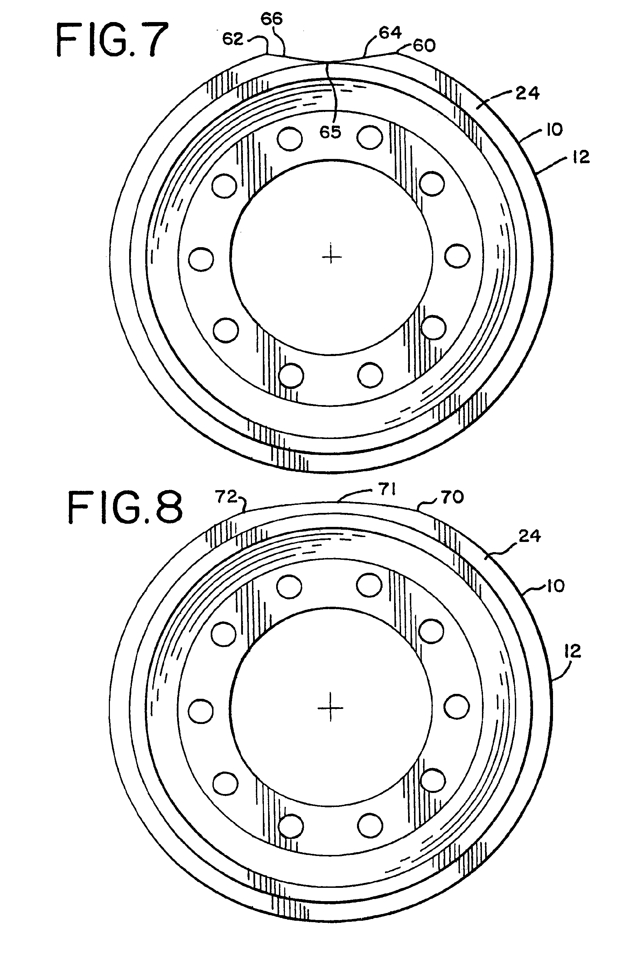

Referring now to Figure 7 of the drawings, brake drum 10 is viewed from open end 12, with the thickness of squealer band 24 exaggerated to show the details of the section removed in the balancing operation. Here the milling machine is seen to enter at 60 removing material from squealer band 24 along straight line 64 downwardly to a point 65, and then outwardly at an angle along the straight line 66 exiting at 62. Here it is seen that the removed section that the thickness of squealer band 24 beneath the removed section 64 and 66 is of a continually varying depth. It should also be understood that point 65 is not necessarily an abrupt junction between straight section 64 and 66 but rather may be somewhat of an arcuate section.

Referring now to Figure 8 of the drawings, another embodiment of a balanced brake drum in accordance with the present invention is shown. Here brake drum 10 is shown from open end 12 with the thickness of squealer band 24 exaggerated to depict the present invention. Here the balancing operation is formed with the milling machine beginning its cut into squealer band 24 at 70, extending along an arcuate section of a radius greater than the radius of the outer circumference of squealer band 24 and exiting squealer band 24 at 72. Accordingly, it is seen that the thickness of squealer band beneath removed section 71 is of a continually varying thickness.

## Claims

1. A method of balancing a brake drum (10) comprising the steps of:
providing a brake drum (10) having a generally cylindrical body with an open end (12) and a hub end (16),
the brake drum body including an integral raised squealer band (24) near the open end (12),
the squealer band (24) having a generally uniform thickness around its entire circumference, with an outer edge of the squealer band (24) forming its outer circumference,
removing a portion of the squealer band (24) from the outer edge inwardly to form a section (30,43,44,54,71) of the squealer band (24) with a continually varying thickness.

2. The method of claim 1
wherein the formed section (30) of the squealer band (24) with the continually varying thickness has an outer edge of a generally flat plane.

3. The method of claim 1
wherein the formed section (54) of the squealer band (24) with the continually varying thickness has an outer edge of a generally flat, concave surface.

4. The method of claim 1
wherein the formed section of the squealer band (24) with the continually varying thickness has an outer edge comprised of a first planar, generally flat section (44) extending at an angle from a first area of decreasing thickness of the squealer band (24) and
of a second planar, generally flat section (43) extending from the first area at an angle to form a second area of increasing thickness of the squealer band (24).

5. The method of claim 1
wherein the formed section (30) of the squealer band (24) generally forms a chord across the squealer band.

6. The method of balancing a brake drum (10) as claimed in any preceding claim wherein:
the squealer band (24) is a generally cylindrical squealer band (24) having a generally uniform radial thickness measured from an internal surface of the open end (12) of the brake drum (10) to the outer circumferential edge of the squealer band (24), and wherein the step of removing a portion of the squealer band (24) comprises removing said portion of the squealer band (24) from a first point on its outer circumferential edge inwardly and back to a second point on its circumferential edge to form the section (30) of the squealer band (24) with a continually varying thickness.

7. The method of claim 6
wherein the section of the squealer band (24) with the continually varying thickness has a first generally planar section extending at an angle from the outer circumferential edge to form a first area of the section of the squealer band (24) with the continually varying thickness,
and a second generally planar section extending at an angle from the first area back to the outer circumferential edge to form a second area of the section of the squealer band (24) with continually varying thickness.

8. The method of any preceding claim
wherein the section of the squealer band (24) with the continually varying thickness has a generally convex outer surface.

9. The method of any preceding claim
wherein the section of the squealer band (24) with the continually varying thickness has a radius of curvature greater than the outer circumferential edge of the squealer band (24).

10. A brake drum (10) comprising:
a generally cylindrical body with an open end (12) and a hub end (16),
the brake drum body including an integral raised squealer band (24) near the open end (12),
the squealer band (24) having a generally uniform thickness, except for a formed portion of the squealer band (24) having a reduced, continually varying thickness.

11. The brake drum (10) of claim 10 wherein the formed portion of the squealer band (24) has an outer edge of a generally flat plane.

12. The brake drum (10) of claim 10 wherein the formed portion of the squealer band (24) has an outer edge of a generally flat, concave surface.

13. The brake drum (10) of claim 10 wherein the formed portion of the squealer band (24) has an outer edge comprised of a first planar, generally flat section (44) extending at an angle to form a first area of decreasing thickness of the squealer band (24) and
a second planar, generally flat section (43) extending from the first area at an angle to form a second area of increasing thickness of the squealer band (24).

14. The brake drum (10) of claim 10 wherein the formed portion of the squealer band (24) generally forms a chord across the squealer band (24).
